# FASCICULE DE BREVET EUROPEEN

(11) **EP 3 430 937 B1**
(45) Date de publication et mention de la délivrance du brevet: **19.08.2020**
(21) Numéro de dépôt: 18184065.3
(22) Date de dépôt: 17.07.2018
(51) Int. Cl.: A44B 11/25, A44B 11/26, A44B 11/28

(54) **BOUCLE DE FIXATION**
BEFESTIGUNGSSCHLINGE
FASTENING LOOP

(30) Priorité: 18.07.2017 FR 1756809
(43) Date de publication de la demande: 23.01.2019
(73) Titulaire: Zedel, 38920 Crolles (FR)
(72) Inventeur: EMONIN, Simon, 38000 Grenoble (FR)
(74) Mandataire: Talbot, Alexandre

(56) Documents cités:
- WO-A1-03/059107
- CN-Y- 201 263 446
- JP-A- 2007 061 239
- US-A- 2 205 092
- US-A1- 2007 220 719
- US-A1- 2009 094 811
- US-B1- 6 357 092

## Description

### Domaine technique de l'invention

L'invention est relative à une boucle de fixation et à un harnais qui comporte une telle boucle de fixation.

### État de la technique

De manière classique, un travailleur sur corde utilise son harnais afin de se déplacer et travailler en hauteur. Le travailleur sur corde passant la majeure partie de sa journée de travail installé dans son harnais, il est nécessaire d'avoir un harnais réglable et confortable. Le harnais est utilisé quotidiennement et il peut être installé et retiré plusieurs fois par jour. C'est pourquoi le harnais possède une configuration particulière qui lui permet de faciliter son installation et son retrait.

En effet, le harnais est configuré pour pouvoir être enfilé et retiré facilement par un utilisateur tout au long de l'année et dans des domaines différents. De manière classique, le harnais possède des boucles de fixation rapide qui sont configurées pour s'ouvrir et se refermer facilement et rapidement. Ces boucles rapides sont généralement utilisées pour refermer un tour de cuisse et/ou une ceinture.

Cependant, l'utilisation d'une boucle rapide qui est configurée pour faciliter l'ouverture aisée en vue de l'installation du harnais ou de son retrait peut se traduire par une augmentation de la probabilité d'ouverture de la boucle de manière non désirée.

Il existe un compromis à trouver entre la facilité d'utilisation de la boucle rapide et la difficulté à empêcher une ouverture inopinée de la boucle de fixation.

Il est connu d'utiliser une boucle rapide qui comporte un anneau coopérant avec un crochet. Le crochet définit un canal d'insertion et de désinsertion de l'anneau. Le canal d'insertion et de désinsertion est obstrué par un obturateur ou deux obturateurs distincts qui sont actionnés séparément au moyen de deux boutons distincts. Pour ouvrir la boucle de fixation, il faut appuyer sur les deux boutons ce qui nécessite d'utiliser au moins deux doigts. L'actionnement des boutons permet de déplacer les obturateurs pour libérer le canal de désinsertion.

Augmenter le nombre d'obturateurs indépendants permet d'augmenter la sécurité en obligeant l'utilisateur à réaliser une action de plus en plus complexe. L'augmentation du nombre de boutons et la disposition des boutons permet de réduire le taux d'ouverture non désirée. Cependant, cette sécurité accrue se traduit par une utilisation plus difficile de la boucle ce qui la rend de moins en moins intéressante et notamment si la boucle ne peut être actionnée lorsque l'on porte des gants.

Il est connu d'utiliser une boucle rapide qui comporte un anneau coopérant avec un crochet définissant un canal d'insertion et de désinsertion de l'anneau. Le canal d'insertion et de désinsertion est obstrué par un seul obturateur actionné par un bouton pour faciliter l'utilisation de l'obturateur. En revanche, le canal présente une forme complexe ce qui impose un cheminement particulier à l'anneau pour s'insérer ou sortir du crochet. L'utilisateur doit faire preuve d'une certaine dextérité pour déplacer l'anneau pour installer ou retirer son harnais. La complexité du cheminement dans le canal permet de pallier à une éventuelle ouverture non-désirée de l'obturateur.

Le document US6357092 divulgue une boucle à deux actions pour pouvoir être fermée.

### Objet de l'invention

Un objet de l'invention consiste à prévoir une boucle de fixation qui est facile à utiliser et dont les probabilités d'ouverture non désirées sont réduites.

La boucle de fixation est remarquable en ce qu'elle comporte:
- un premier élément de fixation muni d'un premier organe d'accouplement,
- un deuxième élément de fixation muni d'un deuxième organe d'accouplement définissant un crochet, le crochet étant configuré pour coopérer avec le premier organe d'accouplement de sorte que le premier organe d'accouplement soit fixé au deuxième organe d'accouplement de manière amovible,
- un système d'obturation configuré pour définir une première position empêchant la désinsertion du premier organe d'accouplement avec le deuxième organe d'accouplement et une deuxième position autorisant l'insertion et la désinsertion du premier organe d'accouplement, le système d'obturation comportant :
   ∘ un premier obturateur présentant une première position configurée pour obturer au moins partiellement le crochet et empêcher la désinsertion du premier organe d'accouplement avec le deuxième organe d'accouplement et une deuxième position configurée pour insérer et désinsérer le premier organe d'accouplement,
   ∘ un deuxième obturateur présentant une première position empêchant la désinsertion du premier organe d'accouplement avec le deuxième organe d'accouplement en obturant au moins partiellement le crochet et une deuxième position d'insertion et de désinsertion du premier organe d'accouplement.

La boucle de fixation est également remarquable en ce que :
- la première position du premier obturateur est configurée pour empêcher le déplacement du deuxième obturateur depuis sa première position à sa deuxième position,
- le deuxième obturateur sépare le premier organe d'accouplement et le premier obturateur le long d'un canal de désinsertion défini par le crochet.

Dans un développement, lorsque le premier obturateur est dans la première position, le premier obturateur masque au moins partiellement le deuxième obturateur de manière à empêcher un passage du deuxième obturateur de la première position à la deuxième position.

De manière avantageuse, le déplacement du premier obturateur depuis la première position à la deuxième position est réalisé selon une première direction de déplacement et le déplacement du deuxième obturateur depuis la première position à la deuxième position est réalisé selon une deuxième direction différente de la première direction.

Dans un autre développement, la première direction et la deuxième direction définissent un angle au moins égal à 45°. Avantageusement, l'angle est au moins égal à 90°, de préférence au moins égal à 120°.

Dans un mode de réalisation avantageux, le premier obturateur et le deuxième obturateur sont montés mobiles en rotation, la rotation du premier obturateur de la première position à la deuxième position est réalisée dans un premier sens et la rotation du deuxième obturateur de la première position à la deuxième position est réalisée dans un deuxième sens opposé au premier sens.

De manière préférentielle, le premier obturateur est monté mobile en translation depuis la première position à la deuxième position et mobile en rotation pour actionner le deuxième obturateur de la première position à la deuxième position, le premier obturateur étant dans la deuxième position.

Il est également avantageux de prévoir que le premier obturateur prend appui sur le crochet dans la première position.

De manière préférentielle, le premier obturateur est configuré pour former un capot de protection qui masque le deuxième obturateur pour empêcher un actionnement du deuxième obturateur de sa première position à sa deuxième position.

Il est avantageux de prévoir que le premier obturateur soit configuré pour empêcher l'actionnement du deuxième obturateur lorsque le premier obturateur est dans sa première position.

Dans un mode de réalisation particulier, le premier obturateur est monté mobile par rapport à un point d'appui fixé au deuxième obturateur. Le premier obturateur comporte un élément de blocage. Le premier obturateur est configuré de sorte que, lorsque le premier obturateur est dans la première position, l'élément de blocage empêche le déplacement du deuxième obturateur de sa première position à la deuxième position et que lorsque le premier obturateur est dans la deuxième position, l'élément de blocage autorise le déplacement du deuxième obturateur de sa première position à la deuxième position.

Avantageusement, le premier obturateur est monté rotatif par rapport au deuxième obturateur et l'élément de blocage est monté rotatif par rapport au deuxième obturateur.

L'invention a également pour objet un harnais qui comporte une boucle de fixation selon l'un des modes de réalisation précédents. Le premier élément de fixation est muni d'un premier organe d'accrochage à une première sangle et le deuxième élément de fixation est muni d'un deuxième organe d'accrochage à une deuxième sangle

L'invention a également pour objet un procédé d'ouverture d'une boucle de fixation qui est facile à utiliser et qui réduit les risques d'ouverture non désirée.

Le procédé d'ouverture de la boucle de fixation est remarquable en ce qu'il comporte :
- fournir une boucle de fixation selon la revendication 1,
- déplacer le premier obturateur d'une première position empêchant la désinsertion du premier organe d'accouplement avec le deuxième organe d'accouplement jusqu'à une deuxième position autorisant l'insertion et la désinsertion du premier organe d'accouplement, la première position du premier obturateur empêchant le déplacement du deuxième obturateur de la première position à la deuxième position,
- déplacer le deuxième obturateur de la première position empêchant la désinsertion du premier organe d'accouplement avec le deuxième organe d'accouplement jusqu'à la deuxième position autorisant l'insertion et la désinsertion du premier organe d'accouplement.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 4 représentent des vues schématiques en coupe de différentes étapes de l'ouverture d'une boucle de fixation selon un premier mode de réalisation,
- les figures 5 à 8 représentent des vues schématiques en perspective de différentes étapes de l'ouverture d'une boucle de fixation selon le premier mode de réalisation,
- les figures 9 à 14 représentent des vues schématiques en coupe de différentes étapes de l'ouverture d'une boucle de fixation selon un deuxième mode de réalisation,
- les figures 15 à 17 représentent des vues schématiques en perspective de différentes étapes de l'ouverture d'une boucle de fixation selon le deuxième mode de réalisation,
- la figure 18 représente, de manière schématique, un harnais muni de boucles de fixation selon l'invention.

### Description détaillée

La boucle de fixation 1 comporte un premier élément de fixation 2 et un deuxième élément de fixation 3. Le premier élément de fixation 2 et le deuxième élément de fixation 3 sont montés amovibles et sont configurés pour assurer l'installation et la désintallation du premier élément de fixation 2 sur le deuxième élément de fixation 3 ou l'inverse. Le premier élément de fixation 2 et le deuxième élément de fixation 3 possèdent chacun une face avant comportant les zones d'actionnement de la boucle et une face arrière opposée. La face arrière est avantageusement dirigée vers le corps de l'utilisateur.

Le premier élément de fixation 2 comporte d'un premier organe d'accouplement 4. Le deuxième élément de fixation 3 comporte d'un deuxième organe d'accouplement 5. Le premier organe d'accouplement 4 coopère avec le deuxième organe d'accouplement 5 pour assurer la fixation du premier élément de fixation 2 avec le deuxième élément de fixation 3. Le premier organe d'accouplement 4 peut être un trou, un creux ou un élément en saillie.

Dans le mode de réalisation illustré, le premier organe d'accouplement 4 est un trou traversant définissant un anneau. Cependant, le trou peut être borgne ou il est encore possible de prévoir que le premier organe d'accouplement 4 ne soit pas sous la forme d'un anneau fermé. Par exemple, il est possible d'envisager que le premier organe d'accouplement 4 soit sous la forme d'une flèche ou d'une autre forme avec des parties en saillie.

Le deuxième organe d'accouplement 5 comporte un ou plusieurs crochets 6 qui accrochent le premier organe d'accouplement 4, ici le trou traversant. Le crochet ou les crochets 6 sont adaptés à la forme du premier organe d'accouplement 4.

Pour fixer le premier élément de fixation 2 avec le deuxième élément de fixation 3, on installe le premier organe d'accouplement 4 dans le crochet 6. Le crochet 6 du deuxième organe d'accouplement 5 est configuré pour coopérer avec le premier organe d'accouplement 4 de sorte que le premier organe d'accouplement 4 soit fixé au deuxième organe d'accouplement 5 de manière amovible.

Le crochet 6 définit un canal d'insertion et de désinsertion du premier organe d'accouplement 4.

Pour éviter que le premier élément de fixation 2 ne se désolidarise involontairement du deuxième élément de fixation 3, la boucle de fixation 1 possède un système d'obturation qui vient obturer partiellement ou complètement le canal d'insertion et de désinsertion. Le système d'obturation est monté de sorte qu'il permet d'autoriser ou d'interdire la désolidarisation du premier élément de fixation 2 avec le deuxième élément de fixation 3.

Le système d'obturation est configuré pour définir une première position empêchant la désinsertion du deuxième organe d'accouplement 5 avec le premier organe d'accouplement 4 et une deuxième position autorisant l'insertion ou la désinsertion du premier organe d'accouplement 4.

Le système d'obturation comporte un premier obturateur 7 qui présente une première position configurée pour obturer au moins partiellement le crochet 6, c'est-à-dire le canal de désinsertion. Dans sa première position, le premier obturateur 7 empêche la désinsertion du deuxième organe d'accouplement 5 avec le premier organe d'accouplement 4. Le premier obturateur 7 possède une deuxième position configurée pour insérer et désinsérer le premier organe d'accouplement 4 dans le crochet 6.

Le système d'obturation comporte également un deuxième obturateur 8 qui présente une première position empêchant la désinsertion du deuxième organe d'accouplement 5 avec le premier organe d'accouplement 4 en obturant au moins partiellement le crochet 6 et une deuxième position d'insertion et de désinsertion du premier organe d'accouplement 4. La première position du deuxième obturateur 8 peut également être appelée troisième position et la deuxième position di deuxième obturateur 8 peut être appelée quatrième position.

Le premier obturateur 7 est distinct du deuxième obturateur 8. L'actionnement du premier obturateur 7 est indépendant de l'actionnement du deuxième obturateur 8 de sorte qu'il est possible de déplacer le premier obturateur 7 sans déplacer le deuxième obturateur 8. De cette manière, la sécurité est améliorée car un déplacement non désiré du premier obturateur 7 visant à ouvrir le crochet 6 n'entraine pas un déplacement du deuxième obturateur 8 et donc l'ouverture de la boucle de fixation 1. Il n'est pas possible de sortir le premier organe d'accouplement 4 sans déplacer le deuxième obturateur 8 et le premier obturateur 7.

Les inventeurs ont observé que dans le domaine des travaux sur corde où l'utilisateur vient régulièrement en contact avec des éléments extérieurs et notamment dans le domaine de l'élagage où les branches sont nombreuses, il est particulièrement important de prévoir des actionnements spécifiques et différents pour les deux obturateurs 7 et 8. Les inventeurs ont observés qu'un renforcement important de la sécurité intervient lorsque l'ouverture de la boucle nécessite d'appliquer deux forces différentes et consécutives. Les deux forces sont différentes car elles ne sont pas dirigées selon la même direction.

Il est particulièrement avantageux de prévoir que le premier obturateur 7 et le deuxième obturateur 8 sont disposés consécutivement dans le canal d'insertion et de désinsertion. Le premier organe d'accouplement 4 est séparé du premier obturateur 7 par le deuxième obturateur 8. Ainsi, le retrait de l'un des deux obturateurs ne permet pas la sortie hors du crochet 6.

Les premier et deuxième obturateurs 7 et 8 sont agencés de manière à imposer l'utilisation de deux efforts différents et consécutifs sur la boucle de fixation pour obtenir son ouverture. Pour obtenir un tel résultat, la première position du premier obturateur 7 est configurée pour empêcher le déplacement du deuxième obturateur 8 depuis sa première position à sa deuxième position.

Tant que le premier obturateur 7 est dans la première position, le deuxième obturateur 8 ne peut pas se déplacer dans sa deuxième position.

Dans un mode de réalisation particulier, il est possible de masquer le deuxième obturateur 8 au moyen du premier obturateur 7 lorsque ce dernier est dans la première position. Ainsi, il est impossible d'actionner le deuxième obturateur 8 au moins tant que le premier obturateur 7 n'a pas quitté la première position.

En alternative ou en complément, le premier obturateur 7 bloque le fonctionnement du deuxième obturateur 8 tant que le premier obturateur 7 est dans la première position. Le deuxième obturateur 8 peut être accessible, mais sa sollicitation n'entraine pas un passage de la première position à la deuxième position.

Cette solution est particulièrement avantageuse lorsque les deux obturateurs 7 et 8 sont montés consécutivement dans le canal de désinsertion car le deuxième obturateur 8 est retiré en dernier ce qui limite les risques d'ouverture non désirée. Il n'est plus possible d'avoir un actionnement du premier obturateur 7 de manière malencontreuse associé à un déplacement du premier organe d'accouplement 7 qui empêche le retour du premier obturateur 7 dans la première position après sollicitation. Dans ce cas de figure, il n'y a plus que le deuxième obturateur 8 qui empêche l'ouverture de la boucle de fixation 1. En cas d'actionnement malencontreux du deuxième obturateur 8, la boucle peut s'ouvrir.

La boucle de fixation est soumise à deux actionnements différents dans le temps et dans leurs composantes pour obtenir l'ouverture de la boucle de fixation. La zone d'actionnement d'un obturateur est un bouton ou un levier qui est accessible depuis la face avant ou autre et qui entraine le déplacement de la partie se trouvant dans le canal de désinsertion.

Dans les modes de réalisation illustrés, la zone d'actionnement est formée directement sur l'obturateur de sorte que le sens de déplacement de l'obturateur est identique au sens de déplacement de la zone d'actionnement.

Le premier effort actionnant le premier obturateur 7 est appliqué dans une direction différente du deuxième effort actionnant le deuxième obturateur 8 de manière à réduire le taux d'ouverture de la boucle de fixation 1 de manière non désirée.

Le premier obturateur 7 est mobile, selon une première direction de déplacement, depuis la première position jusqu'à la deuxième position. Le premier obturateur 7 se déplace suite à un premier effort qui comporte une composante selon la première direction de déplacement. Le deuxième obturateur 8 est configuré pour que cette composante selon la première direction de déplacement soit inefficace pour déplacer le deuxième obturateur 8. Il est alors nécessaire d'appliquer un deuxième effort différent et adapté à la direction de déplacement du deuxième obturateur 7 pour obtenir l'ouverture de la boucle de fixation 1.

Par première et deuxième directions de déplacement des premier et deuxième obturateurs 7 et 8, on entend première et deuxième direction de déplacement de la zone d'actionnement du premier obturateur 7 et de la zone d'actionnement du deuxième obturateur 8.

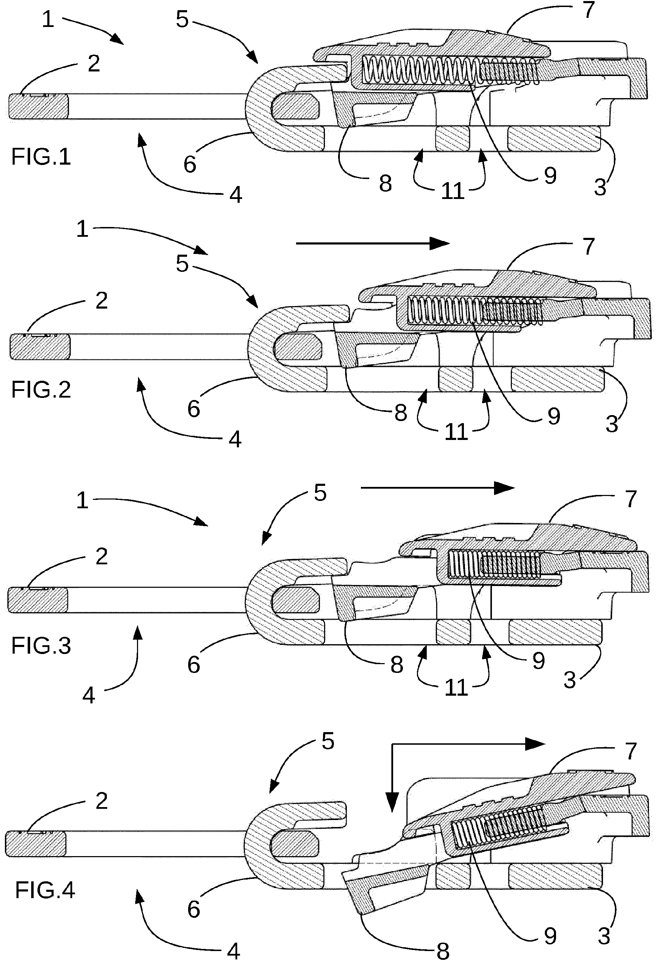

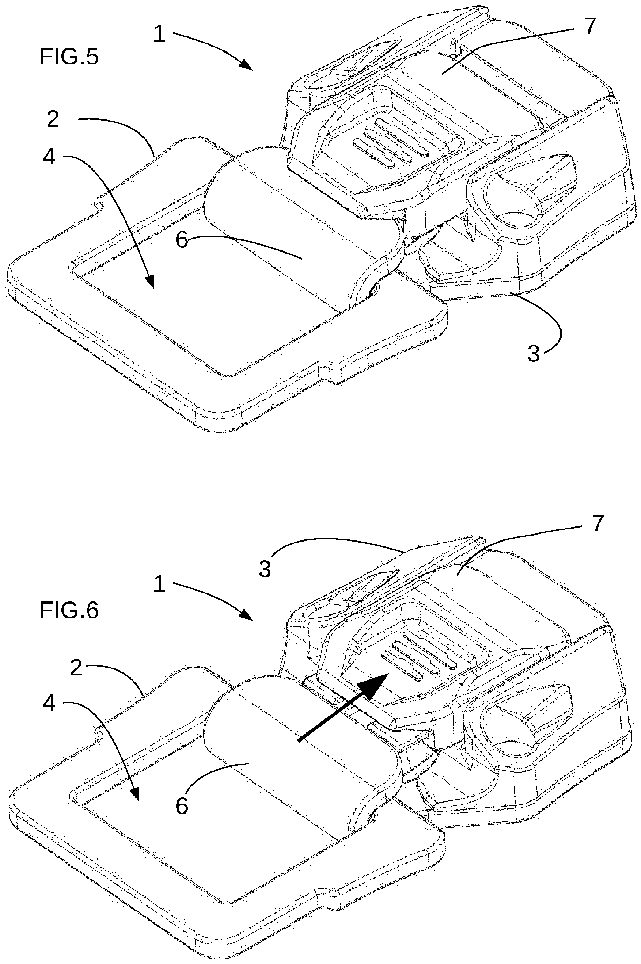

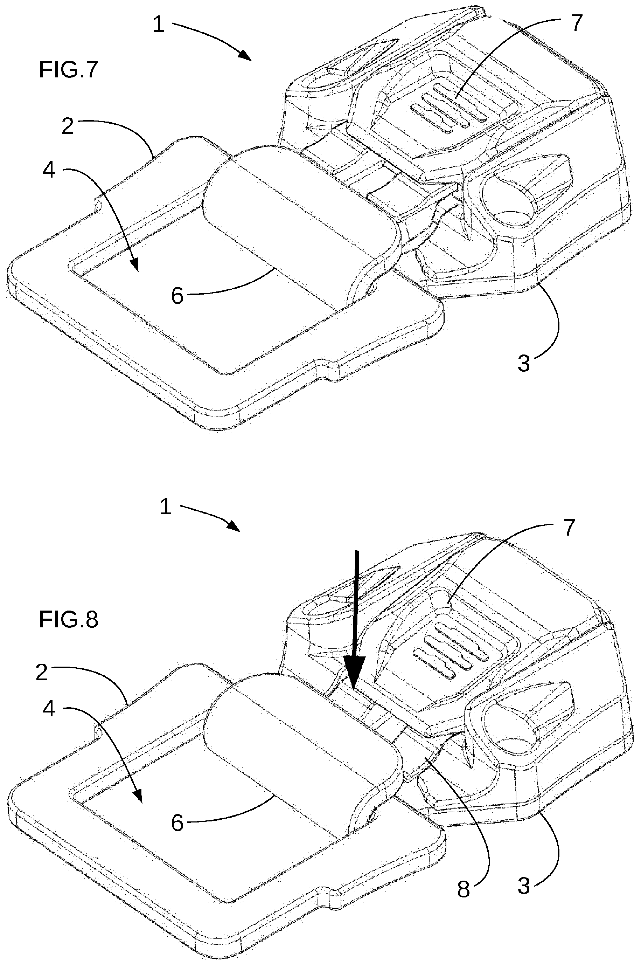

Dans le mode de réalisation illustré aux figures 1 à 8, le premier obturateur 7 est monté mobile en translation et la première direction de déplacement correspond à la translation qui emmène le bouton du premier obturateur 7 depuis la première position à la deuxième position. Le premier obturateur 7 s'éloigne du crochet 6 comme cela est illustré aux figures 1, 2 et 3.

En appliquant une force suffisante sur le premier obturateur 7 et selon la première direction de déplacement, il est possible de déplacer le premier obturateur 7. La première direction de déplacement peut correspondre au trajet réalisé par un doigt de l'utilisateur pour déplacer le premier obturateur 7 ce qui facilite l'utilisation de la boucle de fixation.

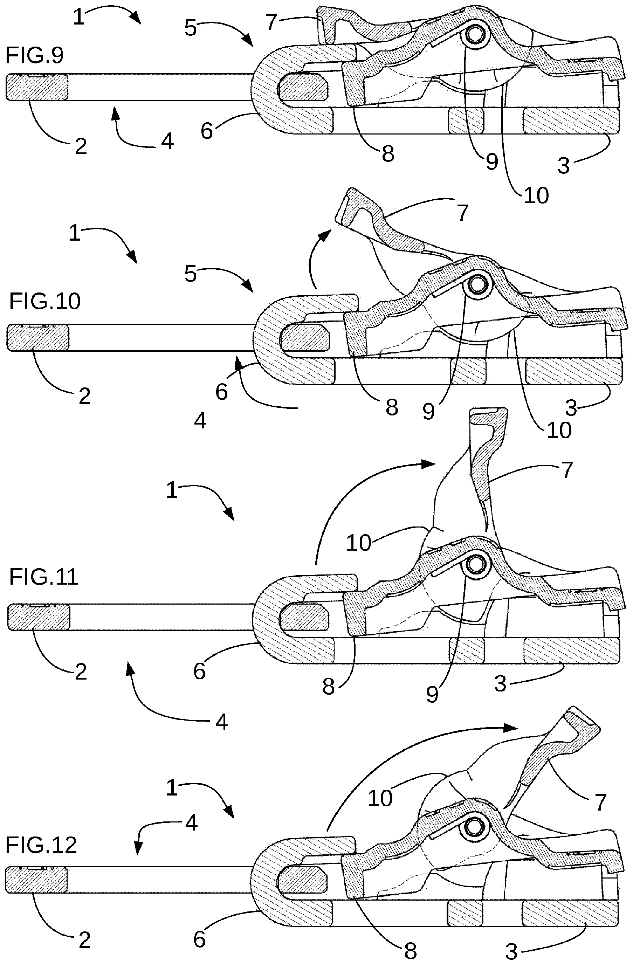

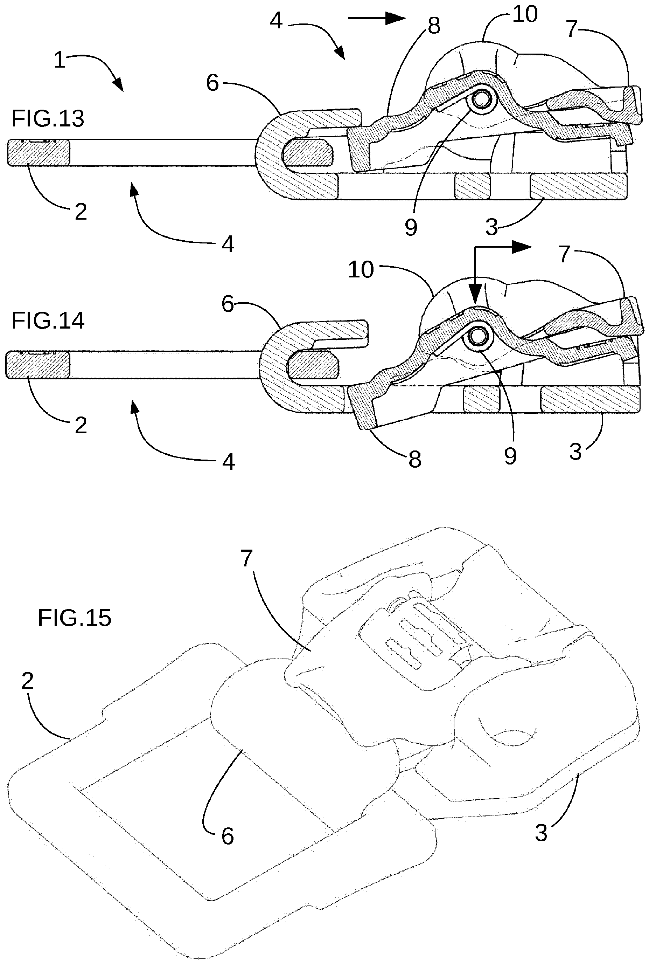

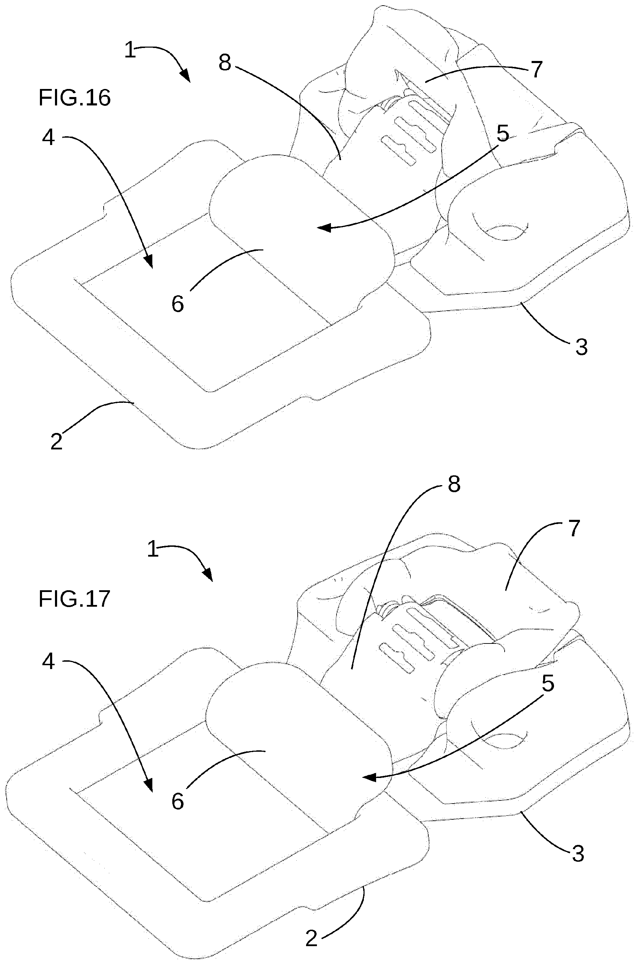

Dans le mode de réalisation illustré aux figures 9 à 17, le premier obturateur 7 est monté mobile en rotation. Même si le mouvement du levier du premier obturateur 7 est un mouvement de rotation, cette rotation peut être obtenue en appliquant une force qui comporte une composante selon une direction de déplacement et qui représente sensiblement une translation. La première direction de déplacement peut correspondre à une translation qui emmène le bouton du premier obturateur 7 depuis la première position à la deuxième position. Les figures 9 à 13 montrent une rotation du premier obturateur d'un angle environ égal à 180°. Même si l'effort à appliquer pour obtenir le déplacement du premier obturateur est plus complexe que dans le mode de réalisation précédent, il est possible d'observer un mouvement translatif qui éloigne le premier obturateur du crochet, ici vers la droite.

Le mouvement de déplacement du premier obturateur 7 est avantageusement un mouvement simple tel qu'une translation ou une rotation pour passer de la première position à la deuxième position car cela permet à l'utilisateur de désactiver facilement le premier obturateur 7 même avec des gants et/ou un seul doigt.

Le deuxième obturateur 8 est également mobile depuis la première position configurée pour obturer au moins partiellement le crochet 6 à la deuxième position libérant le crochet 6. Le déplacement de la première position à la deuxième position s'effectue selon une deuxième direction de déplacement. La deuxième direction de déplacement est différente de la première direction de déplacement. Ainsi, il est plus difficile de désengager le premier obturateur 7 et le deuxième obturateur 8 par un même mouvement, par exemple au moyen d'une branche qui s'accroche au premier obturateur 7.

De manière particulièrement avantageuse, la deuxième direction de déplacement fait un angle au moins égal à 45° avec la première direction de déplacement. En d'autres termes, si une première force est appliquée sur le premier obturateur 7 et selon la première direction, cette première force n'entraine pas le désengagement du deuxième obturateur 8. De manière avantageuse, l'angle entre les deux directions est au moins égal à 90° et de préférence au moins égal 120° de sorte que la direction prise pour déplacer le premier obturateur 7 correspond à la direction inverse que doit prendre le deuxième obturateur pour son déplacement. De manière classique, si un premier déplacement est subit par la boucle de fixation 1 qui entraine un premier effort de retrait du premier obturateur 7, un déplacement inverse se traduit naturellement par un retour du premier obturateur dans sa première position et non par le retrait du deuxième obturateur 8.

Pour atteindre la deuxième position de la boucle de fixation 1, il est nécessaire d'avoir une deuxième force qui s'applique sur le deuxième obturateur 8 selon la deuxième direction.

En conséquence, pour atteindre la deuxième position de la boucle de fixation 1, il faut consécutivement basculer le premier obturateur 7 de la première position à la deuxième position puis basculer le deuxième obturateur 8 de la première position à la deuxième position.

Dans un mode de réalisation particulièrement avantageux, le premier obturateur 7 est associé à un ressort de rappel 9 qui est configuré pour ramener le premier obturateur 7 dans la première position. Ainsi, si la force utilisée pour basculer le premier obturateur 7 dans la deuxième position disparait avant d'appliquer une deuxième force selon la deuxième direction, le premier obturateur 7 retourne à la première position pour bloquer l'actionnement du deuxième obturateur 8.

De cette manière, il est nécessaire d'avoir l'application successive de deux forces selon des directions différentes pour obtenir l'ouverture de la boucle de fixation 1. Il est également nécessaire que les deux forces soient appliquées en même temps au moins pour initier le changement de position du deuxième obturateur 8 et éviter un retour du premier obturateur 7 dans sa première position.

Dans un mode de réalisation, il est possible de prévoir que le deuxième obturateur 8 soit également associé à un autre ressort de rappel de manière à ramener le deuxième obturateur 8 dans la première position. Dans le mode de réalisation illustré aux figures 1 à 4, le ressort de rappel peut être formé par la charnière qui est déformée élastiquement.

Dans un autre mode de réalisation, le premier obturateur 7 est configuré pour engager le retour du deuxième obturateur 8 dans la première position lorsque le premier obturateur 7 retourne dans la première position. De cette manière, le ressort de rappel du premier obturateur 7 intervient également pour le deuxième obturateur 8.

L'ouverture de la boucle de fixation 1 peut donc être obtenue en appliquant une première force dans une première direction afin de déplacer le premier obturateur 7 de la première position à la deuxième position. Une fois la deuxième position atteinte, une deuxième force est appliquée. Cette deuxième force est appliquée sur le deuxième obturateur 8 afin d'ouvrir la boucle de fixation 1.

Dans les différents modes de réalisation illustrés, le basculement du premier obturateur 7 de la première position à la deuxième position se fait en éloignant la zone d'actionnement du premier obturateur 7 et le crochet 6.

Dans le mode de réalisation illustré aux figures 1 à 8, le premier obturateur 7 possède un bouton mobile en translation. Dans le mode de réalisation illustré aux figures 9 à 17, le premier obturateur 7 possède un levier mobile en rotation.

Le deuxième obturateur 8 peut être mobile en translation ou en rotation. Dans les différents modes de réalisation illustrés, le deuxième obturateur 8 est mobile en rotation car ce mode de réalisation est plus facile à utiliser par l'utilisateur qui applique déjà un premier effort pour désactiver le premier obturateur 7.

Par ailleurs, il est particulièrement avantageux de prévoir que le deuxième effort pour désactiver le deuxième obturateur 8 soit un effort en direction de l'intérieur de la boucle de fixation 1, c'est à dire un effort depuis la face avant vers la face arrière. De cette manière, la boucle de fixation 1 peut être ouverte aisément car la boucle de fixation 1 vient généralement en contact du corps de l'utilisateur.

Dans un mode de réalisation particulier, le premier obturateur 7 est configuré pour empêcher le deuxième obturateur 8 d'être dans la deuxième position lorsque le premier obturateur 7 est dans la première position. Cette configuration permet d'éviter que le deuxième obturateur 8 reste en deuxième position lorsque le premier obturateur 7 est en première position.

Dans une configuration avantageuse illustrée aux figures 1 à 8, le premier obturateur 7 prend appui sur le crochet 6 dans la première position. Cet appui permet d'éviter qu'une force appuyant sur le premier obturateur 7 n'entraine le retrait du deuxième obturateur 8 alors que le premier obturateur 7 est encore dans la première position.

Il est également possible de prévoir que le premier obturateur 7 ou une partie du premier obturateur 7 intervienne dans l'actionnement du deuxième obturateur 8. De manière préférentielle, un fois que le premier obturateur 7 a quitté la première position, il est possible de l'utiliser pour actionner le deuxième obturateur 8 vers sa deuxième position. Il est alors possible d'utiliser la même surface d'actionnement du premier obturateur 7 pour appliquer la première force qui déplace le premier obturateur 7 de la première position vers la deuxième position puis d'appliquer la deuxième force pour déplacer le deuxième obturateur 8.

Pour obtenir un mode de réalisation facile à utiliser, il est avantageux de prévoir un premier obturateur 7 mobile en translation et un deuxième obturateur 8 mobile en rotation et d'utiliser le premier obturateur 7 pour appuyer sur le deuxième obturateur 8 et le déplacer.

Comme cela est illustré aux figures 1 à 4, il est particulièrement avantageux de prévoir que le ressort 9 soit monté mobile en rotation afin de garder le fonctionnement du premier obturateur 7 dans toutes les configurations. Par exemple, le ressort de rappel 9 est monté sur une charnière qui possède également un ressort de rappel qui replace le deuxième obturateur 8 dans la première position.

De manière préférentielle, si la première force n'est plus appliquée et la deuxième force est appliquée, le premier obturateur 7 revient dans la première position et obture partiellement l'orifice de sortie du crochet 6 de sorte que la désinsertion du premier organe d'accouplement 4 soit impossible ou fortement compliquée.

Dans le mode de réalisation illustré aux figures 9 à 17, le premier obturateur 7 et le deuxième obturateur 8 sont tous les deux montés mobiles en rotation. Le premier obturateur 7 est monté mobile en rotation selon un premier sens de rotation et le deuxième obturateur 8 est monté mobile en rotation selon un deuxième de rotation qui est opposé au premier sens de rotation.

Lorsque le premier obturateur 7 est dans la première position, il cache le deuxième obturateur 8 afin d'imposer l'application de deux mouvements antagonistes de manière consécutive pour ouvrir la boucle de fixation 1. Le premier obturateur 7 prend appui sur le crochet 6 pour mieux sécuriser la boucle de fixation 1 d'une ouverture involontaire.

Dans le mode de réalisation illustré, le premier obturateur 7 et le deuxième obturateur 8 partagent le même axe de rotation, mais il est possible d'avoir des axes de rotation différents.

De manière avantageuse, l'accès au deuxième obturateur 8 n'est possible que lorsque le premier obturateur a pivoté d'un angle au moins égal à 45°, de préférence au moins égal à 90%. De cette manière, il est nécessaire d'avoir un premier effort sur une distance suffisamment importante pour obtenir un accès au deuxième obturateur 8.

De manière avantageuse, le premier obturateur 7 et le deuxième obturateur 8 partagent le même ressort de rappel de sorte que la pression appliquée sur le ressort de rappel augmente avec le déplacement du premier obturateur 7 puis avec le déplacement du deuxième obturateur 8. Il est donc de plus en plus difficile d'obtenir l'ouverture de la boucle de fixation 1 car l'appui sur le deuxième obturateur 8 incite le premier obturateur à revenir vers la première position.

Il est également avantageux de prévoir que le deuxième obturateur 8 bascule de la première position à la deuxième position lorsque l'on applique une force dirigée vers l'intérieur du deuxième élément. Dans ce cas de figure, il est beaucoup plus difficile d'obtenir l'ouverture non recherchée du deuxième obturateur. En effet, il faut relever le premier obturateur 7 qui forme un capot. Un fois le premier obturateur 7 relevé, il est nécessaire d'appuyer sur le deuxième obturateur 8 pour ouvrir la boucle de fixation 1.

Les sens de rotation des deux obturateurs 7 et 8 étant opposés, il est difficile de réaliser l'ouverture non intentionnelle de la boucle de fixation 1 car il faut appliquer une première force qui a tendance à relever le levier du premier obturateur 7 vers la face avant de la boucle 1 puis appliquer une deuxième force dirigée vers la face arrière. En parallèle, il faut que les deux forces soient associées à des déplacements consécutifs et en directions contraires pour avoir l'ouverture de la boucle 1.

Les différents modes de réalisation restent faciles d'utilisation car le même bouton est utilisé pour appliquer les deux mouvements de sorte qu'un seul doigt peut être utilisé, la face arrière reposant contre le corps de l'utilisateur. En alternative, le doigt utilisé pour déplacer le premier obturateur 7 se retrouve naturellement disposé entre le premier obturateur 7 et le second obturateur 8 de sorte qu'un changement dans la force appliquée par le doigt de l'utilisateur permet l'ouverture de la boucle.

Dans un mode de réalisation particulier, il est avantageux d'avoir un axe de rotation fixe par rapport au corps du deuxième élément 3 pour éviter qu'un appui sur les deux actionneurs 7 et 8 entraine le basculement du deuxième actionneur 8 de la première position à la deuxième position. Le crochet 6 reste obturé au moyen du premier obturateur 7.

Dans un mode de réalisation illustré aux figures 9 à 17, le premier obturateur 7 est monté mobile par rapport au deuxième obturateur 8. Le premier obturateur 7 prend appui sur le deuxième obturateur 8. Dans le mode de réalisation illustré, l'axe de rotation du premier obturateur 7 est fixé au deuxième obturateur 8 et l'axe de rotation peut se déplacer lors du mouvement du deuxième obturateur 8.

Le deuxième obturateur 8 présente un mouvement autre qu'une rotation par rapport à l'axe de rotation du premier obturateur 7.

Dans l'exemple illustré, le deuxième obturateur 8 est mobile en flexion ou en rotation selon un autre axe de rotation. Dans le cas illustré, une extrémité du deuxième obturateur 8 est préférentiellement fixée au corps du deuxième élément 3. Cependant, il est également possible de prévoir un autre mouvement tel qu'une translation par exemple.

Le premier obturateur 7 est configuré pour empêcher l'actionnement du deuxième obturateur 8 de sa première position à sa deuxième position lorsque le premier obturateur 7 est dans sa première position. Le premier obturateur 7 possède un élément de blocage qui est monté mobile par rapport au deuxième obturateur 8 et par rapport au corps du deuxième élément 3.

Lorsque le premier obturateur 7 est dans sa première position, l'élément de blocage prend appui sur le corps du deuxième élément 3 pour empêcher le déplacement du deuxième obturateur 8 depuis la première position jusqu'à la deuxième position.

Lorsque le premier obturateur 7 est dans sa deuxième position, l'élément de blocage n'empêche pas le déplacement depuis la première position jusqu'à la deuxième position.

Dans l'exemple particulier illustré aux figures 9 à 12, l'élément de blocage est monté rotatif et il coopère avec le corps du deuxième élément 3. Dans les figures 9, 10 et 11, le premier obturateur 7 se déplace de la première position à la deuxième position. Durant ce déplacement, l'élément de blocage se déplace et il bloque le déplacement du deuxième obturateur 8 jusqu'à atteindre un déplacement seuil.

Au-delà d'un certain déplacement, ici une valeur d'angle seuil, l'élément de blocage ne vient plus en contact du corps du deuxième élément 3 lorsque l'on actionne le deuxième obturateur 8. Il est alors possible de déplacer le deuxième obturateur 8 de sa première position à sa deuxième position pour avoir l'ouverture du crochet 6.

Il est possible de moduler la forme et/ou les dimensions de l'élément de blocage pour définir la valeur de l'angle seuil à partir de laquelle l'élément de blocage s'escamote.

Par exemple, il est avantageux de prévoir que l'élément de blocage ne gêne plus l'actionnement du deuxième obturateur 8 après un déplacement du premier obturateur 7 au delà d'un angle au moins égal à 30°, de préférence au moins égal à 90° et encore plus avantageusement au moins égal à 120°.

Dans l'exemple illustré, si l'effort appliqué sur le premier obturateur 7 pour atteindre la deuxième position s'arrête, le premier obturateur revient dans sa première position. L'élément de blocage appuie sur le corps et ramène le deuxième obturateur 8 dans sa première position.

L'élément de blocage peut également être utilisé dans le premier mode de réalisation.

L'utilisation d'un crochet 6 intervient également dans la sécurité en limitant le canal d'insertion/désinsertion. Une fois le canal ouvert, il est nécessaire de déplacer le premier organe d'accouplement 4 pour le sortir du crochet 6.

Afin d'augmenter la sécurité, il est particulièrement avantageux de prévoir que le bouton d'actionnement du premier obturateur 7 se trouve au-dessus du deuxième obturateur 8 dans le canal de désinsertion de sorte qu'un appui sur un élément rigide pouvant actionner le premier obturateur 7 vient encombrer partiellement le canal de désinsertion du premier organe d'accouplement 4.

De la même manière, il est particulièrement avantageux de prévoir que le levier d'actionnement du deuxième obturateur 8 rotatif se trouve entre l'axe de rotation et le crochet 6 de manière à ce que l'élément extérieur qui actionne l'obturateur 8 de manière involontaire fasse obstruction à la désinsertion du premier organe d'accouplement 4.

Comme illustré dans les différents modes de réalisation, il est particulièrement avantageux de prévoir que le premier obturateur 7 prenne appui sur le crochet 6 et qu'il prenne également appui contre le corps du deuxième élément de fixation par l'intermédiaire de l'axe de rotation du deuxième obturateur 8.

De manière avantageuse, le deuxième obturateur 8 est disposé à l'intérieur du crochet 6, c'est-à-dire entre la face avant et la face arrière du deuxième élément 3 et il est configuré pour se déplacer vers la face arrière lors de son déplacement vers la deuxième position. Avantageusement, le deuxième obturateur 8 vient en contact de la face interne du crochet 6 pour bloquer le déplacement du premier organe d'accouplement 4.

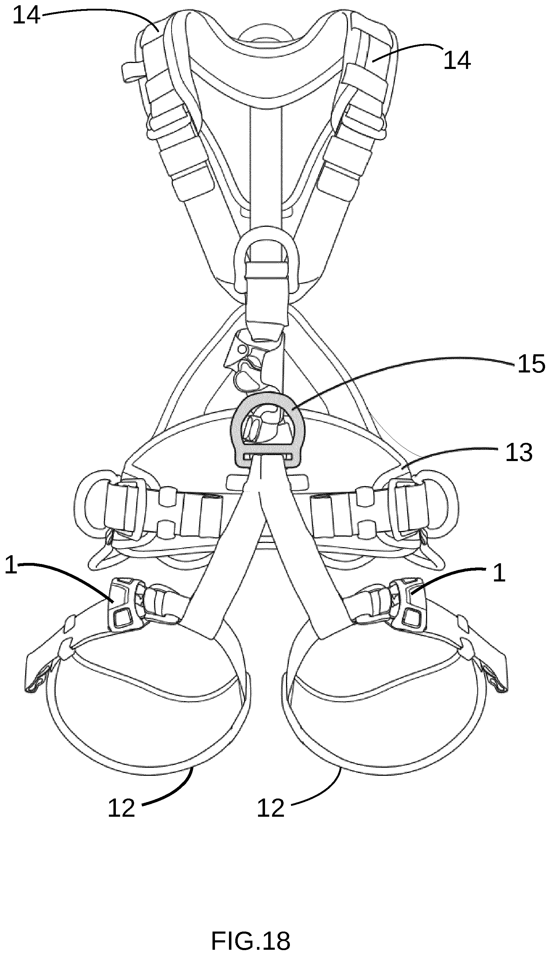

Comme illustré à la figure 18, la boucle de fixation 1 peut être montée sur un harnais. De manière avantageuse, la boucle de fixation 1 est installée pour fermer un tour de cuisse 12. En alternative ou en complément, la boucle de fixation peut être utilisée pour fermer la ceinture 13 du harnais. Il est également possible de prévoir que la boucle de fixation 1 soit installée pour fixer des bretelles 14. Dans le harnais illustré, les bretelles 14 sont montées amovibles par rapport à la ceinture 13. Le harnais comporte un premier connecteur 15 fixé à la ceinture 13 et aux tours de cuisse 12. Il est possible d'utiliser d'autres connecteurs fixés aux bretelles.

Le premier élément 2 comporte d'un premier organe d'accrochage à une première sangle. Le premier élément 2 peut être un anneau avec une extrémité qui forme le premier organe d'accouplement 4 et l'autre extrémité qui forme l'organe d'accrochage à la première sangle.

Le deuxième élément 3 comporte d'un deuxième organe d'accrochage à une deuxième sangle. Le deuxième organe d'accrochage peut être formé par une ou plusieurs fentes 11.

Le procédé d'ouverture de la boucle de fixation 1 comporte la fourniture d'un premier élément de fixation 2 muni d'un premier organe d'accouplement 4 et d'un deuxième élément de fixation 3 muni d'un deuxième organe d'accouplement 5 définissant un crochet 6. Le crochet 6 est configuré pour coopérer avec le premier organe d'accouplement 4 de sorte que le premier organe d'accouplement 4 soit fixé au deuxième organe d'accouplement 5 de manière amovible. Le crochet 6 est obturé par le premier obturateur 6 et le deuxième obturateur 7.

Pour ouvrir la boucle de fixation, il convient de déplacer le premier obturateur 7 d'une première position empêchant la désinsertion du premier organe d'accouplement 4 avec le deuxième organe d'accouplement 5 jusqu'à une deuxième position autorisant l'insertion et la désinsertion du premier organe d'accouplement 4.

La première position du premier obturateur 7 empêche le déplacement du deuxième obturateur de la première position empêchant la désinsertion du deuxième organe d'accouplement avec le premier organe d'accouplement jusqu'à la deuxième position autorisant l'insertion et la désinsertion du premier organe d'accouplement.

Ensuite, il convient de déplacer le deuxième obturateur 8 de la première position empêchant la désinsertion du premier organe d'accouplement avec le deuxième organe d'accouplement jusqu'à la deuxième position autorisant l'insertion et la désinsertion du premier organe d'accouplement 4. Une fois la boucle ouverte, il est possible de retirer le premier organe hors du crochet 6.

## Revendications

1. Boucle de fixation comportant :
- un premier élément de fixation (2) muni d'un premier organe d'accouplement (4),
- un deuxième élément de fixation (3) muni d'un deuxième organe d'accouplement (5) définissant un crochet (6), le crochet (6) étant configuré pour coopérer avec le premier organe d'accouplement (4) de sorte que le premier organe d'accouplement (4) soit fixé au deuxième organe d'accouplement (5) de manière amovible,
- un système d'obturation (7, 8) configuré pour définir une première position empêchant la désinsertion du premier organe d'accouplement (4) avec le deuxième organe d'accouplement (5) et une deuxième position autorisant l'insertion et la désinsertion du premier organe d'accouplement (4), le système d'obturation (7, 8) comportant :
∘ un premier obturateur (7) présentant une première position configurée pour obturer au moins partiellement le crochet (6) et empêcher la désinsertion du premier organe d'accouplement (4) avec le deuxième organe d'accouplement (5) et une deuxième position configurée pour autoriser l'insertion et la désinsertion du premier organe d'accouplement (4),
∘ un deuxième obturateur (8) présentant une première position empêchant la désinsertion du premier organe d'accouplement (4) avec le deuxième organe d'accouplement (5) en obturant au moins partiellement le crochet (6) et une deuxième position d'insertion et de désinsertion du premier organe d'accouplement (4),
boucle de fixation (1) **caractérisée en ce que** :
- la première position du premier obturateur (7) est configurée pour empêcher le déplacement du deuxième obturateur (8) depuis sa première position à sa deuxième position,
- le deuxième obturateur (8) sépare le premier organe d'accouplement (4) et le premier obturateur (7) le long d'un canal de désinsertion défini par le crochet.

2. Boucle de fixation (1) selon la revendication précédente, dans laquelle, lorsque le premier obturateur (7) est dans la première position, le premier obturateur (7) masque au moins partiellement le deuxième obturateur (8) de manière à empêcher un passage du deuxième obturateur (8) de la première position à la deuxième position.

3. Boucle de fixation (1) selon l'une des revendications précédentes, dans laquelle le déplacement du premier obturateur (7) depuis la première position à la deuxième position est réalisé selon une première direction de déplacement et le déplacement du deuxième obturateur (8) depuis la première position à la deuxième position est réalisé selon une deuxième direction différente de la première direction.

4. Boucle de fixation (1) selon la revendication précédente, dans laquelle la première direction et la deuxième direction définissent un angle au moins égal à 45°.

5. Boucle de fixation (1) selon la revendication précédente, dans laquelle l'angle est au moins égal à 90°, de préférence au moins égal à 120°.

6. Boucle de fixation (1) selon l'une quelconque des revendications précédentes, dans laquelle le premier obturateur (7) et le deuxième obturateur (8) sont montés mobiles en rotation et dans laquelle la rotation du premier obturateur (7) de la première position à la deuxième position est réalisée dans un premier sens et la rotation du deuxième obturateur (8) de la première position à la deuxième position est réalisée dans un deuxième sens opposé au premier sens.

7. Boucle de fixation (1) selon l'une quelconque des revendications 1 à 6, dans laquelle le premier obturateur (7) est monté mobile en translation depuis la première position à la deuxième position et mobile en rotation pour actionner le deuxième obturateur (8) de la première position à la deuxième position, le premier obturateur (7) étant dans la deuxième position.

8. Boucle de fixation (1) selon l'une quelconque des revendications précédentes, dans laquelle le premier obturateur (7) prend appui sur le crochet (6) dans la première position.

9. Boucle de fixation (1) selon la revendication précédente, dans laquelle le premier obturateur (7) est configuré pour former un capot de protection qui masque le deuxième obturateur (8) pour empêcher un actionnement du deuxième obturateur (8) de sa première position à sa deuxième position.

10. Boucle de fixation (1) selon l'une quelconque des revendications précédentes, dans laquelle le premier obturateur (7) est configuré pour empêcher l'actionnement du deuxième obturateur (8) lorsque le premier obturateur (7) est dans sa première position.

11. Boucle de fixation (1) selon la revendication précédente, dans laquelle :
- le premier obturateur (7) est monté mobile par rapport à un point d'appui fixé au deuxième obturateur (8),
- le premier obturateur (7) comporte un élément de blocage,
- le premier obturateur (7) est configuré de sorte que, lorsque le premier obturateur (7) est dans la première position, l'élément de blocage empêche le déplacement du deuxième obturateur de sa première position à la deuxième position et que lorsque le premier obturateur (7) est dans la deuxième position, l'élément de blocage autorise le déplacement du deuxième obturateur de sa première position à la deuxième position.

12. Boucle de fixation (1) selon la revendication précédente, dans laquelle le premier obturateur (7) est monté rotatif par rapport au deuxième obturateur (8) et dans laquelle l'élément de blocage est monté rotatif par rapport au deuxième obturateur (8).

13. Harnais comportant une boucle de fixation selon l'une quelconque des revendications précédentes, dans lequel le premier élément de fixation (2) est muni d'un premier organe d'accrochage à une première sangle et le deuxième élément de fixation (3) est muni d'un deuxième organe d'accrochage (11) à une deuxième sangle.

14. Procédé d'ouverture d'une boucle de fixation comportant :
- fournir une boucle de fixation selon la revendication 1,
- déplacer le premier obturateur (7) d'une première position empêchant la désinsertion du premier organe d'accouplement (4) avec le deuxième organe d'accouplement (5) jusqu'à une deuxième position autorisant l'insertion et la désinsertion du premier organe d'accouplement (4), la première position du premier obturateur (7) empêchant le déplacement du deuxième obturateur (8) de la première position à la deuxième position,
- déplacer le deuxième obturateur (8) de la première position empêchant la désinsertion du premier organe d'accouplement (4) avec le deuxième organe d'accouplement (5) jusqu'à la deuxième position autorisant l'insertion et la désinsertion du premier organe d'accouplement (4).

## Patentansprüche

1. Befestigungsschlinge, umfassend:
- ein erstes Befestigungselement (2), das mit einem ersten Kupplungsorgan (4) ausgestattet ist,
ein zweites Befestigungselement (3), das mit einem zweiten Kupplungsorgan (5) ausgestattet ist, welches einen Haken (6) definiert, wobei der Haken (6) dafür ausgelegt ist, um mit dem ersten Kupplungsorgan (4) derart zusammenzuwirken, dass das erste Kupplungsorgan (4) an dem zweiten Kupplungsorgan (5) lösbar befestigt wird,
- ein Verschlusssystem (7, 8), das dafür ausgelegt ist, um eine erste Position zu definieren, welche die Entfernung des ersten Kupplungsorgans (4) mit dem zweiten Kupplungsorgan (5) verhindert, und eine zweite Position, die das Einsetzen und Entfernen des ersten Kupplungsorgans (4) gestattet, wobei das Verschlusssystem (7, 8) umfasst:
∘ einen ersten Verschluss (7), der eine erste Position aufweist, die dafür ausgelegt ist, um mindestens teilweise den Haken (6) zu schließen und das Entfernen des ersten Kupplungsorgans (4) mit dem zweiten Kupplungsorgan (5) zu verhindern, und eine zweite Position, die dafür ausgelegt ist, um das Einsetzen und Entfernen des ersten Kupplungsorgans (4) zu gestatten,
∘ einen zweiten Verschluss (8), der eine erste Position aufweist, die das Entfernen des ersten Kupplungsorgans (4) mit dem zweiten Kupplungsorgan (5) verhindert, indem mindestens teilweise der Haken (6) geschlossen wird, und eine zweite Position zum Einsetzen und zum Entfernen des ersten Kupplungsorgans (4),
wobei die Befestigungsschlinge (1) **dadurch gekennzeichnet ist, dass**:
- die erste Position des Verschlusses (7) dafür ausgelegt ist, um die Verschiebung des zweiten Verschlusses (8) aus seiner ersten Position in seine zweite Position zu verhindern,
- der zweite Verschluss (8) das erste Kupplungsorgan (4) und den ersten Verschluss (7) entlang eines Entfernungskanals trennt, der von dem Haken definiert wird.

2. Befestigungsschlinge (1) nach dem vorhergehenden Anspruch, wobei, wenn sich der erste Verschluss (7) in der ersten Position befindet, der erste Verschluss (7) mindestens teilweise den zweiten Verschluss (8) maskiert, um einen Übergang des zweiten Verschlusses (8) aus der ersten Position in die zweite Position zu verhindern.

3. Befestigungsschlinge (1) nach einem der vorhergehenden Ansprüche, wobei die Verschiebung des ersten Verschlusses (7) aus der ersten Position in die zweite Position in einer ersten Verschiebungsrichtung durchgeführt wird, und die Verschiebung des zweiten Verschlusses (8) aus der ersten Position in die zweite Position in einer zweiten Richtung durchgeführt wird, die von der ersten Richtung verschieden ist.

4. Befestigungsschlinge (1) nach dem vorhergehenden Anspruch, wobei die erste Richtung und die zweite Richtung einen Winkel von mindestens gleich 45° definieren.

5. Befestigungsschlinge (1) nach dem vorhergehenden Anspruch, wobei der Winkel mindestens gleich 90° ist, vorzugsweise mindestens gleich 120°.

6. Befestigungsschlinge (1) nach einem der vorhergehenden Ansprüche, wobei der erste Verschluss (7) und der zweite Verschluss (8) drehbar montiert sind, und wobei die Drehung des ersten Verschlusses (7) aus der ersten Position in die zweite Position in einer ersten Drehrichtung durchgeführt wird, und die Drehung des zweiten Verschlusses (8) aus der ersten Position in die zweite Position in einer zweiten Richtung entgegengesetzt zur ersten Richtung durchgeführt wird.

7. Befestigungsschlinge (1) nach einem der Ansprüche 1 bis 6, wobei der erste Verschluss (7) translatorisch bewegbar aus der ersten Position in die zweite Position und drehbar montiert ist, um den zweiten Verschluss (8) aus der ersten Position in die zweite Position zu betätigen, wobei sich der erste Verschluss (7) in der zweiten Position befindet.

8. Befestigungsschlinge (1) nach einem der vorhergehenden Ansprüche, wobei der erste Verschluss (7) an dem Haken (6) in der ersten Position anliegt.

9. Befestigungsschlinge (1) nach dem vorhergehenden Anspruch, wobei der erste Verschluss (7) dafür ausgelegt ist, um eine Schutzhülle zu bilden, die den zweiten Verschluss (8) maskiert, um eine Betätigung des zweiten Verschlusses (8) aus seiner ersten Position in seine zweite Position zu verhindern.

10. Befestigungsschlinge (1) nach einem der vorhergehenden Ansprüche, wobei der erste Verschluss (7) dafür ausgelegt ist, um die Betätigung des zweiten Verschlusses (8) zu verhindern, wenn sich der erste Verschluss (7) in seiner ersten Position befindet.

11. Befestigungsschlinge (1) nach dem vorhergehenden Anspruch, wobei:
- der erste Verschluss (7) bewegbar in Bezug auf einen festgelegten Anlagepunkt an dem zweiten Verschluss (8) montiert ist,
- der erste Verschluss (7) ein Blockierungselement umfasst,
- der erste Verschluss (7) derart ausgelegt ist, dass, wenn sich der erste Verschluss (7) in der ersten Position befindet, das Blockierungselement die Verschiebung des zweiten Verschlusses aus seiner ersten Position in die zweite Position verhindert, und dass, wenn sich der erste Verschluss (7) in der zweiten Position befindet, das Blockierungselement die Verschiebung des zweiten Verschlusses aus seiner ersten Position in die zweite Position gestattet.

12. Befestigungsschlinge (1) nach dem vorhergehenden Anspruch, wobei der erste Verschluss (7) drehbar in Bezug auf den zweiten Verschluss (8) montiert ist, und wobei das Blockierungselement drehbar in Bezug auf den zweiten Verschluss (8) montiert ist.

13. Gurtzeug, umfassend eine Befestigungsschlinge nach einem der vorhergehenden Ansprüche, wobei das erste Befestigungselement (2) mit einem ersten Verankerungsorgan an einem ersten Band ausgestattet ist, und das zweite Befestigungselement (3) mit einem zweiten Verankerungsorgan (11) an einem zweiten Band ausgestattet ist.

14. Verfahren zum Öffnen einer Befestigungsschlinge, umfassend:
- bereitstellen einer Befestigungsschlinge nach Anspruch 1,
- verschieben des ersten Verschlusses (7) aus einer ersten Position, die das Entfernen des ersten Kupplungsorgans (4) mit dem zweiten Kupplungsorgan (5) verhindert, bis zu einer zweiten Position, die das Einsetzen und das Entfernen des ersten Kupplungsorgans (4) gestattet, wobei die erste Position des ersten Verschlusses (7) die Verschiebung des zweiten Verschlusses (8) aus der ersten Position in die zweite Position verhindert,
- verschieben des zweiten Verschlusses (8) aus der ersten Position, die das Entfernen des ersten Kupplungsorgans (4) mit dem zweiten Kupplungsorgan (5) verhindert, bis zu einer zweiten Position, die das Einsetzen und das Entfernen des ersten Kupplungsorgans (4) gestattet.

## Claims

1. Fixing buckle comprising:
- a first securing part (2) provided with a first coupling means (4),
- a second securing part (3) provided with a second coupling means (5) defining a hook (6), the hook (6) being configured to collaborate with the first coupling means (4) so that the first coupling means (4) is attached to the second coupling means (5) in removable manner,
- a blanking system (7, 8) configured to define a first position preventing extraction of the first coupling means (4) from the second coupling means (5) and a second position allowing insertion and extraction of the first coupling means (4), the blanking system (7, 8) comprising:
∘ a first blanking plate (7) presenting a first position configured to at least partially obstruct the hook (6) and prevent extraction of the first coupling means (4) from the second coupling means (5), and a second position configured to allow insertion and extraction of the first coupling means (4),
∘ a second blanking plate (8) presenting a first position preventing extraction of the first coupling means (4) from the second coupling means (5) by at least partially obstructing the hook (6), and a second position for insertion and extraction of the first coupling means (4),
fixing buckle (1) **characterized in that**:
- the first position of the first blanking plate (7) is configured to prevent movement of the second blanking plate (8) from its first position to its second position,
- the second blanking plate (8) separates the first coupling means (4) and the first blanking plate (7) along an extraction channel defined by the hook (6).

2. Fixing buckle (1) according to the preceding claim, wherein, when the first blanking plate (7) is in the first position, the first blanking plate (7) at least partially masks the second blanking plate (8) so as to prevent the second blanking plate (8) from moving from the first position to the second position.

3. Fixing buckle (1) according to any one of the preceding claims, wherein movement of the first blanking plate (7) from the first position to the second position takes place in a first direction of movement and movement of the second blanking plate (8) from the first position to the second position takes place in a second direction different from the first direction.

4. Fixing buckle (1) according to the preceding claim, wherein the first direction and the second direction define an angle at least equal to 45°.

5. Fixing buckle (1) according to the preceding claim, wherein the angle is at least equal to 90°, preferably at least equal to 120°.

6. Fixing buckle (1) according to any one of the preceding claims, wherein the first blanking plate (7) and second blanking plate (8) are mounted movable in rotation and wherein rotation of the first blanking plate (7) from the first position to the second position takes place in a first direction and rotation of the second blanking plate (8) from the first position to the second position takes place in a second direction opposite to the first direction.

7. Fixing buckle (1) according to any one of claims 1 to 6, wherein the first blanking plate (7) is mounted movable in translation from the first position to the second position and movable in rotation to actuate the second blanking plate (8) from the first position to the second position, the first blanking plate (7) being in the second position.

8. Fixing buckle (1) according to any one of the preceding claims, wherein the first blanking plate (7) presses on the hook (6) in the first position.

9. Fixing buckle (1) according to the preceding claim, wherein the first blanking plate (7) is configured to form a protective cover which masks the second blanking plate (8) to prevent actuation of the second blanking plate (8) from the first position to the second position.

10. Fixing buckle (1) according to any one of the preceding claims, wherein the first blanking plate (7) is configured to prevent actuation of the second blanking plate (8) when the first blanking plate (7) is in the first position.

11. Fixing buckle (1) according to the foregoing claim, wherein:
- the first blanking plate (7) is mounted movable with respect to a support point fixed to the second blanking plate (8),
- the first blanking plate (7) comprises a blocking part,
- the first blanking plate (7) is configured so that, when the first blanking plate (7) is in the first position, the blocking part prevents movement of the second blanking plate from the first position to the second position and that when the first blanking plate (7) is in the second position, the blocking part enables movement of the second blanking plate from the first position to the second position.

12. Fixing buckle (1) according to the preceding claim, wherein the first blanking plate (7) is mounted rotationally with respect to the second blanking plate (8) and wherein the blocking part is mounted rotationally with respect to the second blanking plate (8).

13. Harness comprising a fixing buckle according to any one of the preceding claims, wherein the first securing part (2) is provided with a first means for attachment to a first strap and the second securing part (3) is provided with a second means for attachment (11) to a second strap.

14. Method for opening a fixing buckle comprising:
- providing a fixing loop according to claim 1,
- moving the first blanking plate (7) from a first position preventing extraction of the first coupling means (4) from the second coupling means (5) to a second position allowing insertion and extraction of the first coupling means (4), the first position of the first blanking plate (7) preventing movement of the second blanking plate (8) from the first position to the second position,
- moving the second the blanking plate (8) from the first position preventing extraction of the first coupling means (4) from the second coupling means (5) to the second position allowing insertion and extraction of the first coupling means (4).
